# EUROPÄISCHE PATENTSCHRIFT

(11) **EP 2 706 158 B1**
(45) Veröffentlichungstag und Bekanntmachung des Hinweises auf die Patenterteilung: **15.03.2017**
(21) Anmeldenummer: 13181826.2
(22) Anmeldetag: 27.08.2013
(51) Int. Cl.: E04B 1/72, E04B 1/76, E04F 13/02, E04F 13/04, A01N 25/10, A01N 25/34

(54) **Biozidhaltiges Verkleidungssystem**
Cladding system containing biocidal agent
Système d'habillage contenant du biocide

(30) Priorität: 10.09.2012 CH 16432012
(43) Veröffentlichungstag der Anmeldung: 12.03.2014
(73) Patentinhaber: Greutol AG, 8112 Otelfingen (CH)
(72) Erfinder: Nosbüsch, Günter, 79879 Wutach-Ewattingen (DE); Burkhardt, Michael, 8708 Männedorf (CH); Faller, Jutta, 79862 Höchenschwand (DE)
(74) Vertreter: Pestalozzi, Deborah

(56) Entgegenhaltungen:
- DE-A1-102008 022 018
- DE-U1-202006 000 874
- DE-U1-202010 004 805
- US-A1- 2006 171 976

## Beschreibung

### TECHNISCHES GEBIET

Die vorliegende Erfindung betrifft ein Verkleidungssystem für Gebäudeteile, insbesondere ein Wärmedämmverbundsystem, bestehend aus mehreren Funktionsschichten, wobei mindestens eine der Schichten biozidhaltig ist.

### STAND DER TECHNIK

Wärmedämmsysteme werden seit mehr als 50 Jahren im Neubau zur Sanierung und thermischen Verbesserung von Gebäuden verbaut. Sie finden Anwendung an den verschiedenen Bauteilen von Gebäuden, wie z.B. an Aussenfassaden, wie beispielsweise in der DE 20 2010 004 805 U1 beschrieben, aber auch an Innenwänden, Gebäudedecken und erdberührten Bereichen. Bekannt sind ebenfalls die Anwendung im Kühlraumbau oder Industriebau, wo die Dämmsysteme als Fertigelemente oder Sandwichkonstruktionen angewendet werden. Der primäre technische Nutzen von Dämmsystemen liegt darin, dass die Gebäudeteile thermisch entkoppelt werden können und somit der Wärmefluss unterbunden und dadurch unerwünschter Energieverlust vermieden werden kann.

Speziell bei Dämmsystemen an Aussenwänden von beheizten Gebäuden hat dies zur Folge, dass die dem Aussenraum zugewandten Oberflächen kühl bleiben und nicht, wie bei monolithischen Mauerwerken, permanent erwärmt werden. Durch die Abstrahlung der auf dem Dämmstoff befindlichen oft dünnlagigen Putzschalen, erniedrigt sich die Oberflächentemperatur häufig unter die der Lufttemperatur. Es kommt häufig und oft lang anhaltend durch die Unterschreitung des Taupunktes an diesen Oberflächen zur Kondensatbildung und damit anhaltender Oberflächenfeuchte. Ein ähnliches Phänomen ist bei Aufbauten in Innenräumen mit relativ hoher Luftfeuchte bekannt. Durch die Abkühlung an kalten Oberflächen auf Aussenwänden kommt es zu Kondensatbildung und anhaltender Oberflächenfeuchte, besonders in kalten Jahreszeiten.

Es ist bekannt, dass dauerfeuchte Untergründe das Wachstum von Mikroorganismen begünstigen. Bevorzugt werden im Innenbereich Pilze und Hefen im Aussenbereich Pilze und Algen auf feuchten Untergründen gefunden. Diese Organismen führen dazu, dass befallene Fassaden sehr schmutzig und unschön erscheinen und zu erheblichen ästhetischen Einschränkungen führen. Regional wird der Befall von Fassadenoberflächen mit Algen und/oder Pilzen als "Mangel" im Sinne der Rechtssprechung eingestuft. In fortgeschrittener Phase des Befalls können Pilze und Flechten sogar tief in die Farb- oder Putzstruktur eindringen und dadurch Schäden durch Ablösungen dieser Schutzschichten hervorrufen.

Im Innenbereich können Mikroorganismen, die auf den Oberflächen der Innenfarben oder Innenputze wachsen durch die Abgabe von Sporen an die Atemluft gesundheitliche Schäden bei den Bewohnern auslösen.

Stand der Technik ist es, solche Oberflächen durch den Einsatz von Bioziden ensprechend bewuchshemmend einzustellen. Durch die Zumischung dieser Biozide in Bautenbeschichtungen wird der sich ansiedelnde Organismus in seiner Wachstumsdynamik nachhaltig gehemmt oder durch die Wechselwirkung des Organismus mit dem Biozid wird dieser abgetötet und somit unwirksam gemacht. Die erforderlichen Konzentrationen der eingemischten Biozide sind bekannt und sie können, je nach Anforderung, in einem gewissen Spektrum variert werden. Zum Einsatz kommen Algizide und Fungizide, die gemäss Biozidverordnung (Richtlinie 98/8/EG des Europäischen Parlamentes und des Rates über das Inverkehrbringen von Biozidprodukten) angewendet werden dürfen. Hierzu zählen Biozide der Gruppen der Triazine, Harnstoffe, Isothiazolinone, Pyridine, Benzimidazole oder Verbindungen von Halogenen oder Schwermetalle. Die Chemie und die Wirkungsweise von Bioziden in Bautenbeschichtungen sind in Fachkreisen bekannt.

Durch das Einmischen dieser Verbindungen in die zur Anwendung kommenden Bautenbeschichtungen wie Putze, Farben, Lasuren, Spachtelmassen sind die Biozide in den Beschichtungen verteilt. Die WO2005/118726 A1 zum Beispiel offenbart die Verwendung einer Zusammensetzung gegen Algen- und Pilzbefall in unterschiedlichen Bautenbeschichtungen, insbesondere in der Abschlussbeschichtung eines Wärmedämmverbundsystems.

Die relevanten Beschichtungen bestehen häufig aus Bindemitteln auf der Basis von in Wasser emulgierten und stabilisierten Polymeren, die mit mineralischen Füllstoffen und Granulaten versehen sind. Typische Zusammensetzungen für Farben und Putze wurden in Zusammenarbeit zwischen dem Forschungsinstitut der Fraunhofergesellschaft, IBP Institut für Bauphysik in Holzkirchen und der herstellenden Industrie entwickelt und veröffentlicht und werden als Industriestandard für Testzwecke benutzt. Diese Rezeptur wird branchenweit "IBP-Rezeptur" genannt und ist wie folgt zusammengesetzt: IBP-Rezeptur:

| | |
|---|---|
| Acronal 290 D | 13.86% |
| Wasser | 7.57% |
| Kronos 2160 | 1.98% |
| Polywhite B | 1.98% |
| Omyacarb 40 SV | 14.85% |
| Omyacarb 130 SV | 16.83% |
| Marmor 0.5-1.0 | 9.90% |
| Marmor ST 1.5 - 2 | 29.70% |
| Polyethylen FPE 930 T | 0.20% |
| Tylose H 10000 YP 2 | 0.10% |
| Bentone EW | 0.15% |
| Pigmentverteiler NL | 0.30% |
| Calgon N Neu | 0.99% |
| NaOH 10%ig | 0.20% |
| Aqitan 282 | 0.20% |
| Dowanol DPnB | 0.99% |
| Acticide SPX | 0.20% |
| | |
| | **100.00%** |

Auch kommen Beschichtungen auf der Basis von Portlandzement zur Anwendung, die mit geeigneten polymeren organischen Vergütungsmitteln versetzt und mit mineralischen Füllstoffen versehen sind, zum Beispiel:

| | |
|---|---|
| CEMI 42.5 R | 11.97% |
| Weisskalkhydrat | 5.00% |
| Dispersionspulver | 2.40% |
| Calciumcarbonatmehl | 30.00% |
| Marmorkörnungung (0.5 - 2 mm) | 50.00% |
| Hydrophobierungsmittel | 0.40% |
| Methylcellulose | 0.20% |
| Stärkeether | 0.03% |
| | |
| | **100.00%** |

Es ist bekannt, dass Biozide, die in diesen Mischungen verteilt sind, während der Nutzungsdauer innerhalb der erhärteten Mischung mobil sind. So wurde festgestellt, dass erhebliche Mengen der Schutzmittel aus der Beschichtung durch Wasser und Temperatureinfluss eluieren und ausgewaschen werden.

Studien haben gezeigt, dass der Transport der Biozide in den erhärteten Beschichtungen ein diffusionskontrollierter Vorgang ist. Zu den gesicherten Erkenntnissen gehört es auch, dass sich die vornehmlich organischen Biozide in den organischen Domänen der Inhaltsstoffe der Beschichtungsmassen anreichern und aus diesen konditionsabhängig innerhalb der Beschichtungsmatrix diffundieren.

Beschichtungen, die nach dem bestehenden Stand der Technik durch Zumischung von Bioziden zwecks Erreichen eines filmgeschützten Materials zusammengesetzt sind, haben den Nachteil, dass ein erheblicher Teil der Schutzmittel, die oberflächennah eingebaut sind, innerhalb von kurzer Zeit verloren gehen. Dies wurde im Rahmen der besagten Studien und Praxisversuchen an einem Modellhaus sowie realen Gebäuden bewiesen. Auch zeigen diese Studien, dass vor allem die Stofffracht zum Beginn der Bewitterung von filmgeschützten Beschichtungen besonders hoch ist. Neben dem Nachteil, dass die Wirkstoffe, die die Aufgabe haben, das Material langfristig zu schützen, auch wirtschaftlich Werte verloren gehen, ist es von hoher Relevanz, dass die teilweise persistenten Schutzmittel mit dem Regenwasser in das Erdreich abfliessen.

Bemühungen, die Mobilität der Biozide durch Verkapselung zu unterbinden, wie z.B. in EP 1 698 672 A2 oder DE 10 2006 061 890 A1 beschrieben, zeigen nur eingeschränkten Erfolg, wie einschlägige Untersuchungen zeigen.

### DARSTELLUNG DER ERFINDUNG

Der Erfindung liegt daher die Aufgabe zu Grunde, ein verbessertes Wärmedämmverbundsystem zur Verfügung zu stellen, welches den Bewuchs durch Mikroorganismen an der Fassadenoberfläche weiter verringert und dabei aber gleichzeitig die Auswaschung von Bioziden minimiert.

Diese Aufgabe wird gelöst durch ein Verkleidungssystem nach einem der Ansprüche 1-4, ein Verfahren zu dessen Herstellung bzw. Montage nach Anspruch 5, sowie durch ein Armierungsgewebe nach einem der Ansprüche 6-13 bzw. dessen Herstellung nach Anspruch 14 und dessen Verwendung nach Anspruch 15. Ausserdem wird die Aufgabe gelöst durch Bereitstellung eines Gebäudes mit einem erfindungsgemässen Verkleidungssystem.

Mit anderen Worten ist es Gegenstand der vorliegenden Erfindung, die Biozide, die erforderlich sind, um eine ausreichende Bewuchshemmung der Beschichtungsoberfläche zu erreichen, in die tiefer liegenden Ebenen des Dämmsystems zu verlagern (abgesehen von einer Biozidmenge in der/den oberflächennahen Schicht(en), welche der Topfkonservierung dient). Dadurch wird der rasche Austrag unterbunden und die hohe Anfangsfracht an Bioziden nach Fertigstellung der Fläche verhindert. Versuche dazu haben überraschenderweise gezeigt, dass Biozide, die im Unterputz eingemischt worden sind, auf der Oberfläche des Verkleidungssystems eine bewuchshemmende Wirkung haben (siehe Versuch 1).

Das erfindungsgemässe Verkleidungssystem, insbesondere zur Dämmung, insbesondere bevorzugt zur Wärmedämmung eines Gebäudes, weist mindestens
- eine erste, bei einem bestimmungsgemässen Gebrauch des Verkleidungssystems einer Aussenfassade eines Gebäudes zugewandte Schicht auf, aufweisend einen Dämmstoff, sowie
- eine über der ersten Schicht liegende zweite Schicht, aufweisend einen Unterputz bzw. Einbettmörtel, und
- eine über der zweiten Schicht liegende dritte Schicht, aufweisend einen Oberputz bzw. Deckputz. Dabei enthält die zweite Schicht im Unterputz eine als Filmkonservierungsmittel gegen Algen- und/oder Pilzbefall von darüber liegenden Schichten wirksame biozidhaltige Zusammensetzung, welche mindestens ein Fungizid enthält, das geeignet ist, den Befall der Gebäudeoberfläche (13) durch Pilze zu verhindern.

Der Unterputz bzw. Einbettmörtel kann dabei ein organischer oder mineralischer Unterputz auf der Basis von Portlandzement oder Polymerdispersion sein.

Gemäss einer bevorzugten Ausführungsform enthält nur die zweite Schicht die als Filmkonservierungsmittel gegen Algen- und/oder Pilzbefall wirksame biozidhaltige Zusammensetzung. Das schliesst jedoch nicht aus, dass mindestens eine der anderen Schichten des Verkleidungssystems, wie z.B. der Deckputz oder der Farbanstrich, eine gewisse geringe Menge an Biozid enthalten, welches aber der Topfkonservierung dient, und nicht der Filmkonservierung.
Bei flüssigen (z.B. Anstrichen) oder pastösen (z.B. Putz) Beschichtungsstoffen werden zwei Arten der Konservierung unterschieden: die Topfkonservierung (biozide Einstellung im Gebinde, damit der Beschichtungsstoff nicht schon während Transport und Lagerung von Mikroorganismen befallen wird), und die Filmkonservierung. Bei letzterer handelt es sich um eine biozide Ausrüstung der Beschichtung im getrockneten Zustand, damit die Oberfläche nicht von Mikroorganismen wie z.B. Algen oder Pilze befallen wird. Die betreffenden Wirkstoffe weisen eine nur begrenzte Wasserlöslichkeit auf, damit sie durch Witterungseinflüsse nicht ausgewaschen werden (siehe www.heimwerker.sakret.de/glossar/filmkonservierung.html).
Die Wirkung eines antimikrobiellen Wirkstoffs bzw. Biozids als Filmkonservierungsmittel geht somit über die Wirkung als Topfkonservierungsmittel hinaus.
Die typischen Konzentrationen für Biozide zur Erreichung dauerhafter Topfkonservierung in Polymerdispersion oder Zubereitungen dieser beträgt 50-100 ppm (bezogen auf das Gewicht), von z.B. Benzisothiazolinon (BIT) oder/und Methylisothiazolinon (MIT). Bekannt ist auch der Einsatz von zusätzlichen Gaben an chlorierten Isothiazolinonen, wobei auf Grund der Vorgaben zur Produkt-Kennzeichnung selten 15 ppm (bezogen auf das Gewicht) von z.B. CIT überschritten werden.
Demgegenüber müssen zur Erreichung einer dauerhaften Filmkonservierung Konzentrationen aus Algiziden und Fungiziden in den Beschichtungsstoffen in einer Höhe von 500-2000 ppm (bezogen auf das Gewicht) eingestellt werden. Dabei setzt sich die angegebene Maximalkonzentration sinnvollerweise aus den Einzelkonzentrationen mehrerer sich ergänzenden Wirkstoffe zusammen. Bekannt sind hier aus der Klasse der Algizide z.B. die Stoffe Terbutryn, Irgarol, Diuron, Isoproturon und Zinkpyrithion. Aus der Klasse der Fungizide sind z.B. die Stoffe Octylisothiazolinon, Dichloroctylisothiazolinon, Carbendazim oder Jodverbindungen wie z.B. IPBC bekannt.

Trotz allem haben Beschichtungen für Wärmedämmsysteme mit eingemischten Bioziden nach wie vor den Nachteil, dass bei der Herstellung der Materialien in oft händischer Arbeit mit den toxischen Stoffen oder deren Zubereitungen gearbeitet werden muss. Dies führt dazu, dass vielfach die Mischbetriebe von Beschichtungen für Wärmedämmsysteme über ein verschärftes Lager-, Löschwasser- und Abwasserkonzept verfügen müssen, da in erheblichen Mengen Stoffe der Wassergefährdungsklasse 2-3 eingelagert und gehandhabt werden müssen. Zusätze von Bioziden in Trockenmörteln sind nach dem Stand der Technik völlig ausgeschlossen, da die zwangsläufig anfallenden Stäube bei Herstellung, Transport und Anwendung der Produkte durch staubförmige Biozide versetzt sind und die beteiligten Menschen einer unvertretbaren Exposition staubförmiger Biozide aussetzen würden.
Auch werden Verarbeiter auf den Baustellen, wenn sie Beschichtungen mit darin eingemischten Bioziden handhaben, dem Kontakt mit den überwiegend flüssigen und pastösen Stoffgemischen ausgesetzt. Die darin enthaltenen Schutzmittel sind naturgemäss wasserlöslich und können vielfach durch Resorption von der menschlichen Haut aufgenommen werden. Ein weiterer Nachteil des Standes der Technik ist, dass die bei der Herstellung, Verarbeitung und Entsorgung anfallenden Reinigungswässer stets mit teilweise erheblichen Mengen an Bioziden versehen sind. Dies führt dazu, dass die Produktionswässer der Herstellbetriebe mit erheblichem Aufwand von den Schutzmitteln gereinigt werden müssen und Baustellen mit zusätzlichen mobilen Kläranlagen zur Aufreinigung der Waschwässer ausgestattet werden müssen.
Daher ist es von besonderem Vorteil, wenn die für den Filmschutz erforderlichen Biozide in einem vorzugsweise in dem Schichtenaufbau verwendeten Armierungsmaterial eingebracht werden.
Eine besonders bevorzugte Ausführungsform ist daher dadurch gekennzeichnet, dass die zweite Schicht ein im Unterputz eingebettetes und mit der als Filmkonservierungsmittel wirksamen biozidhaltigen Zusammensetzung behandeltes Armierungsgewebe aufweist. Dabei ist das Armierungsgewebe vorzugsweise im oberen Drittel der zweiten Schicht eingebettet.
Indem die für den Filmschutz erforderlichen Biozide durch ein in dem Schichtenaufbau verwendetes Armierungsmaterial eingebracht werden,. kann erreicht werden, dass die Materialien, die zum Aufbau des Verbundsystems erforderlich sind (Kleber, Armierungsspachtel, Putz, Farbe oder Lasur) vollständig oder teilweise frei von Schutzmitteln zur Erreichung eines Filmschutzes gegen Mikroorganismen sein können. Die Berührung mit Bioziden durch Benutzer beschränkt bzw. konzentriert sich somit auf den Ort der Herstellung des Armierungsgewebes. Die Anordnung des Biozids als Filmkonservierungsmittel ausschliesslich im bzw. am Armierungsgewebe hat den weiteren Vorteil, dass im Falle eines Rückbaus des Dämmsystems nur das Armierungsgewebe (z.B. das Glasfasergitter/-netz) im Sondermüll entsorgt werden muss, während die restlichen Baumaterialien regulär recycliert werden können. Ein weiterer Vorteil ist, dass das Trägermaterial (das Gitter/Netz) trocken ist und eine zuverlässigere Applikation erlaubt als das Einmischen von Bioziden in Trockenmasse oder Nassmörtel. Das Armierungsgewebe ist beispielsweise ein Glasfasergewebe, vorzugsweise ein Gitter oder Netz aus textilem Glasfasermaterial.
Das Armierungsmaterial, welches zur Verstärkung von Wärmedämmverbundsystemen eingesetzt wird, besteht üblicherweise aus einem Glasfasergewebe, vorzugsweise einem Gitter oder Netz aus textilem Glasfasermaterial. Ein solches Glasgittergewebe kann durch eine äusserlich aufgebrachte Schutzschicht aus geeigneten polymeren Werkstoffen umhüllt sein. Eine solche das Gewebe oder Gelege umhüllende Schutzschicht dringt gemäss einer bevorzugten Ausführungsform in die gebündelten, verwobenen Glasfilamente ein, hinterlässt aber auch eine die Stränge vollständig umhüllende Schicht aus polymerem Werkstoff. Dies führt dazu, dass Glasfilamente so gegen den alkalischen Angriff, der in der Regel von den die Gewebe umgebenden Armierungsmassen ausgeht, geschützt und gleichzeitig die Verknüpfungspunkte der Gewebestränge unverschiebbar miteinander verbunden sind.
Die Anforderungen an die Widerstandsfähigkeit der so geschützten Glasgittergewebe gegen Alkaliangriff sind in verschiedenen Regelwerken beschrieben. Für Deutschland ist dabei die Norm DIN EN 13496 anwendbar, in den Vereinigten Staaten von Amerika kommt die Regelung EIMA 105.01 zur Anwendung. Im Bereich der Wärmedämmverbundsysteme in Europa definiert die Richtlinie der EOTA ETAG 004 die Anforderungen.
Dabei wird das beschichtete und vollständig ausgehärtete Gewebe im Zugversuch auf seine maximale Reissfestigkeit und Dehnung geprüft (siehe ETAG 004 Pkt. 5.6.7.1) und anschliessend werden die Prüfkörper einer Alterung im alkalischen Milieu unterzogen. Dazu werden die beschichteten und vollständig ausgehärteten Gewerbestreifen 28 Tage in einer wässrigen, alkalischen Lösung bestehend aus 1 g NaOH, 4 g KOH, 0,5 g Ca (OH)₂ in einem Liter destillierten Wasser gelagert. Anschliessend 5 Minuten in einer sauren Lösung bestehend aus 5 ml HCL (35%ig) in 4 1 Wasser neutralisiert und in drei aufeinander folgenden Wasserbädern gespült. Die Prüfkörper werden jeweils 5 Min. in jedem Wasserbad belassen und am Ende 48 Stunden bei Normklima getrocknet.
Nach der so durchgeführten Alterung muss die Reissfestigkeit des beschichteten Glasgittergewebes mindestens noch 50 % der Anfangsfestigkeit vor der Alterung, mindestens aber 20 N/mm betragen.
Neben der Aufgabe des Schutzes des Armierungsgittergewebes vor alkalischem Angriff hat die umhüllende Polymerschicht noch weitere Aufgaben zu erfüllen. So verhindert sie mechanische Beschädigungen während Herstellung, Transport und Anwendung, sie sorgt für eine sichere handwerkliche Anwendbarkeit unter rauen Baustellenbedingungen und erlaubt eine Knickbarkeit der Gewebebahnen und -streifen bei der Verarbeitung an Wand- und Deckenflächen mit Kanten und Wölbungen.

Neben dem Werkstoff Glas als dominantes Basismaterial für Armierungsgewebe, sind Faserstoffe unterschiedlicher Kunststoffen wie Nylon, Acryl oder Acrylnitrit bekannt. Auch können zur Erhöhung der Festigkeit Fasern aus Aramid oder Kohlenstoff eingesetzt werden. Auch sind verwobene Fasern aus Metall zur Herstellung der elektrischen Leitfähigkeit bekannt. Neben der Strukturart Gewerbe können die genannten Faserstoffe auch in der Strukturart Gelege oder Vlies (Nonwoven) vorkommen.
Auch vollständig durchgehende Folien, die als Funktionsschicht eingebaut werden, sind bekannt.
Das Armierungsgewebe kann gemäss einer alternativen Ausführungsform ein Verbundgewebe aus organischen und anorganischen Werkstoffen sein.
Vorzugsweise sind die eingesetzten bioziden Wirkstoffe in der das Armierungsgewebe umgebenden Schutzumhüllung oder in der Beschichtung, mit der das Armierungsgewebe behandelt wird, eingelagert. Das Armierungsgewebe kann aber alternativ dazu auch aus einem Kunststoff bestehen, in dem der mindestens eine biozide Wirkstoff enthalten ist. Als geeignete Beschichtungen bzw. Schutzumhüllungen für Armierungsgewebe haben sich Werkstoffe auf der Basis von Phenolpolymeren Arcylatpolymeren, Styrolpolymeren, Butadienpolymeren und Co- und Terpolymeren dieser, sowie Mischungen davon erwiesen. Für die Anwendung als Schutzschicht für Glasgittergewebe werden häufig Dispersionen auf Basis von Styrol-Butadiencopolymeren und Styrol-Acrylaten angewendet. Dabei werden die Verhältnisse der Monomeren so gewählt, dass eine optimale Steifigkeit unter Beibehaltung der Alkalistabilität gegeben ist. Auch werden Polymerdispersionen verschiedener Monomere und deren Monomerenverhältnisse zur Erreichung der optimalen Eigenschaften gemischt und mit vernetzbaren Monomeren ausgestattet, die zu einer weiteren Erhöhung der mechanischen und chemischen Stabilitäten des Glasgittergewebes führen.
Auch können mehrere Lagen der polymeren Schutzschicht aufgebracht werden, um so bewusst ein funktionelles "Multilayersystem" anzubieten.
Dabei kann das Armierungsgewebe mit einer Schutzschicht versehen sein. Diese Schutzschicht könnte bei der Handhabung des Armierungsgewebes den Kontakt des Handhabers bzw. Handwerkers (der möglicherweise keine Schutzausrüstung gegen Biozidkontakt trägt) mit der biozidhaltigen Schicht verhindern. Eine solche Schutzschicht bietet somit einen temporären bzw. vorübergehenden Schutz der handhabenden Personen bzw. Handwerker vor Kontakt mit im Armierungsgewebe vorhandenen Bioziden bis zum Einbau in das Wärmedämmverbundsystem. Durch Auswahl des Materials und/oder bespielsweise der Dicke dieser Schutzschicht kann der Zeitpunkt des Wegfalls der Schutzwirkung bewusst eingestellt werden, mit anderen Worten kann man dadurch erreichen, dass das Nachlassen der Schutzwirkung zu einem bestimmten Zeitpunkt beginnt und dass dieses Nachlassen kontrolliert werden kann. Die Schutzschicht kann selbst auch mehrschichtig aufgebaut sein. Vorteilhafterweise ist eine solche Schutzschicht derart ausgebildet, dass die Schutzschicht sich nach dem Einbau des Armierungsgewebes in die Unterputzschicht in der umgebenden Unterputzschicht auflöst. Beispielsweise kann die Schutzschicht derart ausgebildet sein, dass sie verseifbar ist und sich im alkalischen Milieu des Unterputzes auflöst. Denkbar wäre auch eine temperatur- oder witterungsbedingte Abhängigkeit der Auflösung der Schutzschicht.
Üblicherweise enthalten die zur Anwendung kommenden Polymerdispersionen weitere Zusatzstoffe, die für Verarbeitung, Lagerstabilität der flüssigen Stoffe und zur farbigen Gestaltung der Endprodukte erforderlich sind. Hier sind vor allem Entschäumer auf der Basis von Mineralölen oder siliziumorganischen Verbindungen zu nennen. Sie verhindern eine unkontrollierte Schaum- und Blasenbildung, die die Qualität des Endproduktes nachhaltig negativ beeinflussen kann.
Weiterhin können zur Konservierung der wässrigen Polymerdispersionen im geringen Masse Biozide zugesetzt werden (wie oben definiert, als sogenannte Topfkonservierer), die das Verschimmeln der Zubereitung verhindern. Hier haben sich insbesondere Kombinationen von Methylisothiazolinon (MIT) und Benzisothiazolinon (BIT) durchgesetzt. Auf Grund ihrer geringen Dosierung und ihrer hohen Löslichkeit tragen sie nicht zur Filmkonservierung der polymeren Schichten bei. Die Konzentrationen liegen üblicherweise um mehr als eine Zehnerpotenz unter den Konzentrationen einer wirksamen Filmkonservierung (Topfkonservierung: 50-100 ppm; Filmkonservierung 500-2000 ppm (jeweils bezogen auf das Gewicht)). Auch können Verdickungsmittel auf Basis von Acrylatpolymeren, Zellulosederivaten, Bentoniten oder Polysacchariden zugesetzt werden, um die Verarbeitung der polymeren Dispersion auf den Produktionsprozess abzustimmen. Gemäss einer bevorzugten Ausführungsform ist mindestens ein biozider Wirkstoff mikroverkapselt.
Gemäss einer besonders bevorzugten Ausführungsform weist nur das Armierungsgewebe die als Filmkonservierungsmittel wirksame biozidhaltige Zusammensetzung auf, welche geeignet ist, den Befall der Gebäudeoberfläche durch Algen und/oder Pilze zu hindern.

Wie oben bereits erwähnt, schliesst dies jedoch nicht aus, dass andere Schichten geringe Mengen Biozid zwecks Topfkonservierung enthalten.

Ein bevorzugtes Verfahren zur Herstellung bzw. Montage des erfindungsgemässen Verkleidungssystems weist die folgenden Schritte auf:
- Verlegung des Dämmstoffs auf einer Aussenfassade eines Gebäudes;
- Fixierung des Dämmstoffs auf der Aussenfassade des Gebäudes, insbesondere durch Verkleben, z.B. durch einen Klebemörtel;
- Aufziehen der biozidhaltigen zweiten Schicht insbesondere durch Aufziehen des Unterputzes bzw. Einbettmörtels und vorzugsweise unmittelbar darauf folgender Einspachtelung eines mit der biozidhaltigen Zusammensetzung behandelten Armierungsgewebes in den Unterputz bzw. Einbettmörtel der biozidhaltigen zweiten Schicht, insbesondere vollständig im oberen Drittel der zweiten Schicht;
- Trocknenlassen der zweiten Schicht;
- Auftragung eines Voranstrichs vorzugsweise frühestens nach 7 Tagen nach dem Trocknenlassen der zweiten Schicht;
- Auftragung des Deckputzes, vorzugsweise frühestens am Folgetag der Auftragung des Voranstrichs und gegebenenfalls Strukturierung des Deckputzes;
- gegebenenfalls Auftragung eines Farbanstrichs.

Eine biozidhaltige zweite Schicht kann somit entweder bedeuten, dass die biozidhaltige Zusammensetzung dem Unterputz bzw. Einbettmörtel beigemischt wurde, und somit der Unterputz bzw. Einbettmörtel biozidhaltig ist, wobei zusätzlich ein biozidfreies oder ein mit einer biozidhaltigen Beschichtung behandeltes Armierungsgewebe in diese zweite Schicht eingebettet sein kann, oder dass der Unterputz bzw. Einbettmörtel im Wesentlichen biozidfrei ist (bis auf mögliches Vorhandensein von geringen Biozidmengen zur Topfkonservierung), dass aber ein mit der biozidhaltigen Zusammensetzung behandeltes Armierungsgewebe in die zweite Schicht eingebettet ist/wird.
Ein solches erfindungsgemässes Armierungsgewebe ist vorzugsweise ein mit einer als Filmkonservierungsmittel gegen Algen- und/oder Pilzbefall wirksamen biozidhaltigen Zusammensetzung behandeltes Glasfasergewebe, welches vorzugsweise durch einen Imprägnierungsprozess beschichtet wurde.
Die biozidhaltige Zusammensetzung enthält vorteilhafterweise mindestens einen diffusionsfähigen bzw. migrationsfähigen antimikrobiellen Wirkstoff. Dieser ist vorzugsweise in einer Konzentration von mindestens 500-600 ppm in der biozidhaltigen Zusammensetzung enthalten (bezogen auf das Gewicht). "Diffusionsfähig" bzw. "migrationsfähig" ist im Rahmen dieses Anmeldetextes so zu verstehen, dass die Stoffe nicht z.B. durch dipol-dipol Wechselwirkungen verankert und somit auch nicht vor einer unkontrollierten Freisetzung geschützt sind.
Als Träger für den mindestens einen antimikrobiellen Wirkstoff wird vorzugsweise Styrolacrylat oder Styrolbutadien verwendet.
Die biozidhaltige Zusammensetzung enthält insbesondere mindestens einen Wirkstoff aus der folgenden Gruppe: Isolthiazolinonderivate; Triazole; Jodverbindungen; Dithiocorbamate; Triazinderivate; Harnstoffderivate; Metallverbindungen.
Dabei ist es besonders vorteilhaft, wenn mindestens ein Fungizid in Form von Octylisothiazolinon (OIT, bzw. 2-Octyl-2H-isothiazol-3-on bzw. C₁₁H₁₉NOS) und/oder Dichloroctylisothiazolinon (DCOIT, bzw. 4,5-Dichlor-2-octyl-2H-isothiazol-3-on bzw. C₁₁H₁₇Cl₂NOS) in der biozidhalten Zusammensetzung enthalten ist.
Des Weiteren kann mindestens ein Algizid und/oder Herbizid der biozidhaltigen Zusammensetzung beigemischt werden.
Terbutryn und/oder Zinkpyrithion sind weitere bevorzugte antimikrobielle Wirkstoffe. Gemäss einer besonders bevorzugten Ausführungsform liegt mindestens ein antimikrobieller Wirkstoff in verkapselter Form vor. Besonders bei gut löslichen Wirkstoffen empfiehlt sich hier die Verkapselung, um ein schnelles Auswaschen (leaching) zu verhindern.

Ein erfindungsgemässes Armierungsgewebe kann dabei wie folgt hergestellt werden:
- Bereitstellen eines textilen Glasfasergewebes oder Geleges;
- Auftragen der biozidhaltigen Zusammensetzung;
Diese Behandlung des Armierungsgewebes auf verschiedene Art ausgeführt werden. Zum Beispiel kann das Armierungsgewebe nach seiner Herstellung einseitig oder beidseitig mit der biozidhaltigen Zusammensetzung beschichtet und imprägniert werden, z.B. durch Aufpinseln bzw. Bestreichen. Alternativ kann das Armierungsgewebe auch durch ein Tauchbad mit der biozidhaltigen Zusammensetzung, mit anschliessendem Abstreifer, hindurch gezogen (in Form von ganzen Bahnen oder Gitterplatten), oder mittels Walzenauftrag umhüllt werden, wobei die Fasern des Armierungsgewebes dann vollständig von der biozidhaltigen Zusammensetzung umhüllt und/oder durchtränkt sein können.
- Trocknen des Glasfasergewebes bis zur Stapelbarkeit.
Die erforderliche Biozidkonzentration und somit indirekt bestimmte Hemmkonzentration an der Beschichtungsoberfläche lässt sich praxisgerecht im Laborversuch nach DIN EN 15 458 für die Hemmkonzentration gegen Algen und nach DIN EN 15 457 für die Hemmkonzentration gegen Pilze bestimmen.

Weitere Ausführungsbeispiele sind in den abhängigen Ansprüchen beschrieben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. Die Grössenverhältnisse in den Zeichnungen sind nur schematisch und nicht wahrheitsgetreu abgebildet. In den Zeichnungen zeigen:
- Fig. 1:: schematische Darstellung eines Schichtenaufbaus eines erfindungsgemässen Verkleidungssystems;
- Fig. 2:: a.) schematische Darstellung eines Armierungsgewebes, wie z.B. eines Glasfasergitters; b.) schematische Darstellung eines Ausschnittes eines Armierungsgewebes mit einer vorzugsweise biozidhaltigen Beschichtung;

### BESCHREIBUNG BEVORZUGTER AUSFÜHRUNGSFORMEN

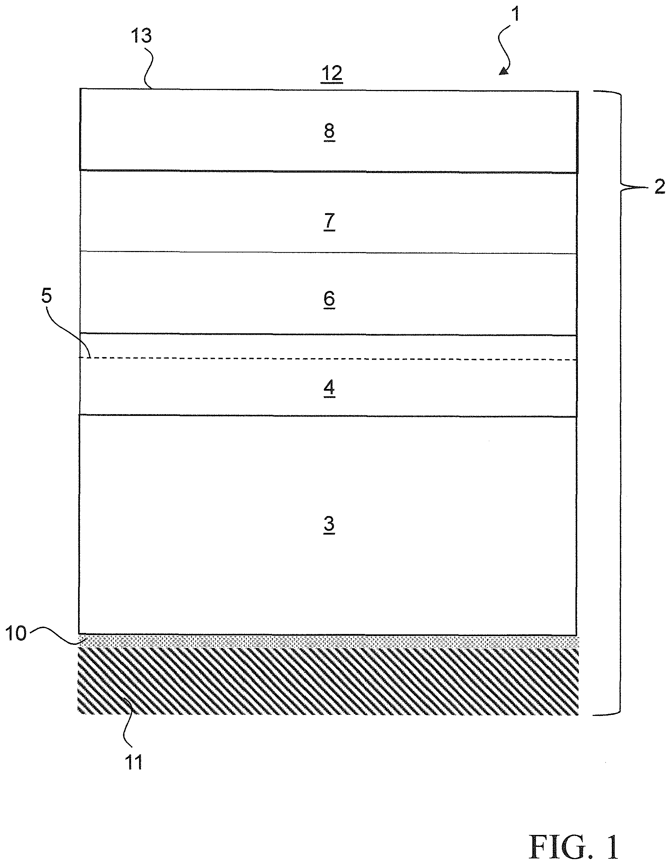

In Figur 1 ist ein typischer Schichtenaufbau 2 eines erfindungsgemässen Verkleidungssystems 1 dargestellt. Zuunterst wird die Dämmplatte 3, welche z.B. aus expandiertem Polystyrol Hartschaum (EPS) besteht, auf der Gebäudefassade montiert, z.B. mittels eines Klebemörtels.
Der Klebemörtel kann dabei ein hydraulisches Bindemittel mit organischem Zusatz aufweisen oder ein organischer Klebeschaum sein (z.B. Klebeschaum auf PolyurethanBasis), und die Verklebung kann dabei vollflächig oder im Sinne einer Rand-Streifen-Verklebung erfolgen.
Auf die Dämmplatte wird dann der Unterputz aufgetragen. Im dargestellten Schichtenaufbau 2 ist ein (bereits mit Biozid beschichtetes) Armierungsgewebe bzw. ein Glasfasergitter 5 in den im Wesentlichen biozidfreien Einbettmörtel bzw. Unterputz 4 eingebettet. Es wäre aber auch denkbar, dass das Biozid in den Einbettmörtel 4 eingemischt wird und das Armierungsgewebe 5 im Wesentlichen biozidfrei, d.h. nicht mit Biozid beschichtet ist. Das Armierungsgewebe 5 selbst ist im erfindungsgemässen Verkleidungssystem 1 optional, aber bevorzugt. Auf die Schicht mit dem Einbettmörtel bzw. Unterputz 4 folgt bei mineralischen Unterputzen meist ein Voranstrich 6, nach oben hin gefolgt von einer Schicht aus Deckputz bzw. Oberputz 7. Die oberste Schicht, d.h. der Farb- bzw. Schutzanstrich 8 optional. Das Armierungsgewebe 5 ist hier im oberen Drittel des Unterputzes 4 angeordnet.
Die Ausdrücke "oben" und "unten" beziehen sich auf einen bestimmungsgemässen schichtweisen Aufbau wie dargestellt, bei dem die Dämmplatte bestimmungsgemäss auf die Aussenfassade des Gebäudes montiert bzw. vorzugsweise geklebt wird, und somit die nebst der Klebeschicht 10 die unterste Schicht darstellt. Der Farb- bzw. Schutzanstrich 8 entspricht der obersten Schicht, dessen Oberfläche 13 nun der Gebäudeoberfläche entspricht und mit der Atmosphäre 12 in Kontakt steht bzw. der Witterung ausgesetzt ist. Der Unterputz bzw. Einbettmörtel kann auf Basis Portlandzement oder auf Basis einer Polymerdispersion hergestellt sein. Vorzugsweise beträgt der Verbrauch des Einbettmörtels 3-5 kg/m², je nach Typ des Einbettmörtels.

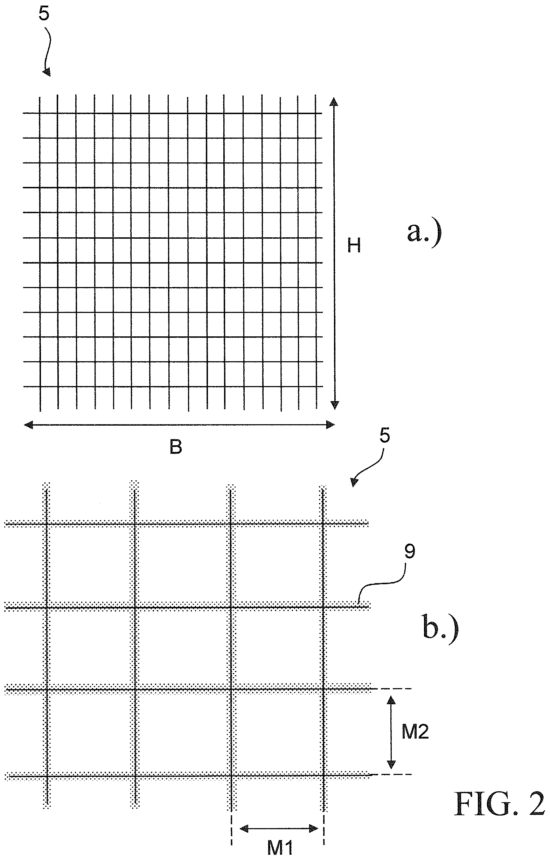

In Figur 2 ist ein erfindungsgemässes Armierungsgewebe schematisch dargestellt. Die Maschengrösse und das Format des Gitters sind variabel und nicht einschränkend auszulegen.
Das Armierungsgitter besteht vorzugsweise aus einem Fasermaterial (Endlosgarn), wie z.B. Glasgarn oder E-Garn, wobei das Material vorzugsweise alkaliresistent appretiert ist. Die Maschenweite beträgt in den unten aufgeführten Beispielen 6.5 x 6.7 mm oder 7.1 x 7.7 mm (Mitte Faden/Mitte Faden). Es sind aber Maschenhöhen M2 und/oder Maschenweiten M1 von ca. 2 bis ca. 50 mm denkbar, wobei das Gitter eine quadratische oder rechteckige oder dreieckige Maschenform aufweisen kann, d.h. wobei Maschenhöhe gleich gross, grösser oder kleiner als die Maschenweite sein kann. Bevorzugte Bereiche von Maschenhöhen M2 und Maschenweiten M1 betragen 4-12 mm, dabei insbesondere 5-10 mm und am meisten bevorzugt 6-8 mm. Das Flächengewicht beträgt in den vorliegenden Beispielen 126 g/mm² oder 155 g/m². Es sind aber Flächengewichte von 50 g/mm² bis 300 g/m² denkbar. Die Reissfestigkeit beträgt ca. 2100-2400 N/5cm (Kette) bzw. ca. 2600 - 2900 N/5cm (Schuss). Das Armierungsgewebe kann in Rollenform oder als bereits zugeschnittene Platten für die Einbettung in den Einbettmörtel der zweiten Schicht bereitgestellt werden. Wenn es in Rollenform bereitgestellt wird, so kann die Grösse vor Ort auf der Baustelle je nach Bedarf zugeschnitten werden. Auch die Breite B und Höhe H des Armierungewebes ist variabel und der bestimmungsgemässen Verwendung anzupassen. Dazu können beispielsweise entsprechende Gitterplattenformate aus langen Bahnen von Armierungsgewebe zugeschnitten werden.

In der Folge wird ein bevorzugtes Verfahren zur Herstellung eines erfindungsgemässen Verkleidungssystems beschrieben:

### Gewebearmierung:

Frühestens 5 Tage nach Verlegung der Dämmplatten wird der Einbettmörtel bzw. Unterputz in einer Schichtstärke von mind. 3 mm mittels rostfreier Stahltraufel oder 10x12 mm Zahntraufel in Bahnen von ca. 1.10 m aufgezogen. Unmittelbar danach werden die vorbereiteten Armierungsgewebe Bahnen mit der Stahltraufel in die Einbettmörtel-Schicht rumpffrei eingespachtelt, wobei gegebenenfalls bei gewissen Putz-Typen nochmals mit Einbettmörtel überzogen wird, während bei anderen Putz-Typen der durch das Gewebe dringende Unterputz bzw. Einbettmörtel planeben abgezogen wird.

Das vorzugsweise biozidbeschichtete Armierungsgewebe (vorzugsweise Glasgittergewebe) ist vorzugsweise vollständig im oberen Drittel der zweiten Schicht bzw. der Einbettmörtelschicht 4 eingebettet und ist vorzugsweise von oben nicht mehr sichtbar. Das Armierungsgewebe wird dazu vorzugsweise an den Seiten ca. 10 cm überlappt und gegebenenfalls um Ecken und Leibungen herumgeführt. Wird das Gewebe z.B. im Bereich von Gerüstverankerungen eingeschnitten, so wird vorzugsweise ein Gewebestreifen über der Schnittkante eingebettet.

Am Sockelabschluss wird das Armierungsgewebe sofort nach dem Einbetten an der Unterkante des Sockelprofils mit einem scharfen Messer abgeschnitten.

### Voranstrich:

Nach einwandfreier Durchtrocknung der Armierungsschicht bzw. der biozidhaltigen zweiten Schicht (mit oder ohne eingebettetem Armierungsgewebe), frühestens jedoch nach 7 Tagen (je nach Witterung und Temperatur), wird der Voranstrich gleichmässig und satt mittels Roller oder Streichbürste aufgetragen.

Der Voranstrich kann dazu gegebenenfalls mit Wasser verdünnt werden.

### Schlussbeschichtung:

Frühestens am Folgetag wird der Deckputz bzw. Oberputz mit einer rostfreien Traufel aufgezogen und strukturiert. Der Hellbezugswert des Deckputzfarbtons sollte vorzugsweise gemäss Norm einen bestimmen Hellbezugswert (Y-Wert) nicht unterschreiten. Der Deckputz kann dabei beispielsweise ein Silikatputz oder ein auf Silikonharz basierender Deckputz, ein Dispersionsputz, ein Silikonharzputz, ein mineralischer Edelputz oder ein anderer dekorativer Oberputz sein.

### Farbanstrich:

Vor allem bei mineralisch gebundenen Deckputzen besteht bei ungünstigen Witterungsbedingungen bei der Verarbeitung und Trocknung die Gefahr von Flecken- und Wolkenbildungen, weshalb ein 2-maliger Anstrich, z.B. mit Silikonharzfarbe vorteilhaft ist.

Im Übrigen gelten die jeweils gültigen Merkblätter des SMGV sowie die SIA-Norm V242/1 "Verputz- und Gipserarbeiten" und 118/243 "Verputzte Aussenwärmedämmung".

### Versuch 1: Hemmwirkung eingemischter Biozide in Unterputzen:

In Versuch 1 wurde die Auswirkung der Einmischung des Biozids in den Unterputz mit der Auswirkung der Einmischung des Biozids in den Oberputz verglichen. Tabelle 1 zeigt dabei den Versuchsaufbau für 6 Proben 1.1-1.6. Tabellen 2 und 3 zeigen die Ergebnisse der Untersuchung. Dabei wurde unterschieden zwischen dem Zustand der Probe nach 4 Tagen Bewässerung, nach 28 Tagen bei 40° Lagerung, und nach 500h Schnellbewitterung. Die Ergebnisse zeigen, dass die Proben 1.2 und 1.5, welche die Einmischung der Biozide in zwei unterschiedliche Unterputze repräsentieren, ebenso frei von mikrobiellem Bewuchs (Algen und Pilze, in Tabelle 2 bzw. 3) waren, wie die Proben 1.1 und 1.4, bei denen das Biozid im Deckputz eingemischt war. Die Proben 1.3 und 1.6 zeigen biozidfreie Referenzen.

**Tabelle 1: Schichtenaufbau der Proben 1.1-1.6**

| **Nr.** | **Dämmstoff** | **Unterputz** | **Gewebe** | **Deck-/Oberputz** | **Bemerkung** |
|---|---|---|---|---|---|
| **1.1** | Expandiertes Polystyrol (EPS) | Typ 1 | 3000 | Typ A mit Bioziden | Biozide im Deckputz |
| **1.2** | EPS | Typ 1 mit Bioziden | 3000 | Typ A | Biozide im **Unterputz** |
| **1.3** | EPS | Typ 1 | 3000 | Typ A | biozidfreier Aufbau als Referenzprobe |
| **1.4** | EPS | Typ 2 | 3000 | Typ A mit Bioziden | Biozide im Deckputz |
| **1.5** | EPS | Typ 2 mit Bioziden | 3000 | Typ A | Biozide im **Unterputz** |
| **1.6** | EPS | Typ 2 | 3000 | Typ A | biozidfreier Aufbau als Referenzprobe |

**Unterputz Typ 1: Greutol Multiflex Spachtel 588 (organisch):**

| | |
|---|---|
| Styrolacrylat 50%ig | 9.50% |
| Terpolymer | 9.50% |
| Wasser | 9.85% |
| Titandioxid | 2.00% |
| Calciumcarbonat Füllstoff | 50.00% |
| Marmorkörnungung (0.5 - 1 mm) | 13.00% |
| Flammschutzmittel | 4.00% |
| Faser | 0.70% |
| Methylcellulose | 0.40% |
| Netz- und Dispergieradditiv | 0.10% |
| Fettalkohol | 0.50% |
| pH-Stabilisator | 0.10% |
| Entschäumer | 0.10% |
| Topfkonservierungsmittel | 0.25% |
| | |
| | **100.00%** |

**Unterputz Typ 2: Greutol Combiputz 488 (mineralisch):**

| | |
|---|---|
| CEMI 42.5 R | 19.82% |
| Trasskalk | 5.00% |
| Dispersionspulver | 2.70% |
| Calciumcarbonat Füllstoff | 70.00% |
| Mineralischer Leichtfüllstoff | 2.00% |
| Methylcellulose | 0.20% |
| Luftporenbildner | 0.02% |
| Hydrophobierungsmittel | 0.20% |
| Stärkeether | 0.02% |
| Faser | 0.04% |
| | |
| | **100.00%** |

**Deckputz A: Greutol Deckputz Aussen:**

| | |
|---|---|
| Styrolacrylat 50% | 11.00% |
| Wasser | 9.2% |
| Titandioxid | 2.00% |
| Calciumcarbonatmehl | 35.00% |
| Marmorkörnung 0.5-2 mm | 35.00% |
| Flammschutzmittel | 5.00% |
| Faser | 0.40% |
| Methylcellulose | 0.02% |
| Schichtsilikat | 0.15% |
| Acrylatverdicker | 0.10% |
| Netz- und Dispergieradditiv | 0.30% |
| Fettalkohol | 0.70% |
| pH-Stabilisator | 0.03% |
| Entschäumer | 0.10% |
| Topfkonservierungsmittel | 0.25% |
| Filmkonservierungsmittel | 0.75% |
| | |
| | **100.00%** |

**Tabelle 2: Prüfung der Hemmwirkung gegen Pilze**

| **Nr.** | **Probe nach 4 Tagen Bewässerung** | **Probe nach 28 Tagen 40° C lagerung** | **Probe nach 500 Std. Schnellbewitterung** |
|---|---|---|---|
| **1.1** | + | + | + |
| **1.2** | + | + | + |
| **1.3** | - | - | - |
| **1.4** | + | + | + |
| **1.5** | o | + | + |
| **1.6** | - | - | - |

| | | | |
|---|---|---|---|
| + kein Bewuchs der Probe o leichter Bewuchs der Probe - starker Bewuchs der Probe | | | |

**Tabelle 3: Prüfung der Hemmwirkung gegen Algen**

| **Nr.** | **Probe nach 4 Tagen Bewässerung** | **Probe nach 28 Tagen 40° C Lagerung** | **Probe nach 500 Std. Schnellbewitterung** |
|---|---|---|---|
| **1.1** | + | + | + |
| **1.2** | + | + | + |
| **1.3** | o | + | - |
| **1.4** | + | + | + |
| **1.5** | + | + | + |
| **1.6** | - | o | - |

| | | | |
|---|---|---|---|
| + kein Bewuchs der Probe o leichter Bewuchs der Probe - starker Bewuchs der Probe | | | |

Wie oben beschrieben kann es besonders vorteilhaft sein, die biozidhaltige Zusammensetzung zwar in der zweiten Schicht, dort aber statt im Unterputz eingemischt, im/am Armierungsgewebe anzuordnen. Daher haben die Erfinder in der Folge die Auswirkung der Beschichtung des Armierungsgewebes mit biozidhaltigen Zusammensetzungen untersucht:
Untenstehend sind bevorzugte Ausführungsbeispiele von beschichteten Armierungsgittern aufgelistet.

### Beispiel 1: Schutzumhüllung auf der Basis von Styrolacrylat

Hier wurde ein Glasgittergewebe verwendet, mit einem Flächengewicht von 126 g/m² und einer Maschenweite von 6,5 x 6,7 mm. Dieses Gitter wurde beschichtet mit einer flüssigen Schutzmasse der folgenden Zusammensetzung:

| | | |
|---|---|---|
| 19.5 g Acticide MKB 3 | ≙ 13.63 % | (Biozidzubereitung, Thor Chemie) |
| 120.2 g Acronal S 559 | ≙ 84.07 % | (Styrol-/Acrylatdispersion, BASF) |
| 1.14 g Agitan 260 | ≙ 0.8 % | (Mineralölentschäumer, Münzing) |
| 2.15 g Acrysol DR 72 | ≙ 1.5 % | (Acrylatverdicker, Dow) |
| Total 143,0 g Beschichtung (flüssig) | ≙ 100 % | |

Dies entspricht einer Trockenbeschichtung der folgenden Zusammensetzung:
5.66 g Acticide MKB 3
60.1 g Acronal S 559
1.14 g Agitan 260
0.45 g Acrysol DR 72
Total 67.35 g Beschichtung (trocken)

### Beispiel 2: Schutzumhüllung auf der Basis einer Dispersion von silanisiertem Styrolacrylat

| | | |
|---|---|---|
| Acticide MKB 3 | ≙ 13.63 % | (Biozidzubereitung, Thor Chemie) |
| Vinnapas 240 HD | ≙ 84.07 % | (Styrol-/Acrylatdispersion, Wacker Chemie) |
| Agitan 260 | ≙ 0.8 % | (Mineralölentschäumer, Münzing) |
| Acrysol DR 72 | ≙ 1.5 % | (Acrylatverdicker, Dow) |

### Beispiel 3: Schutzumhüllung auf der Basis einer Dispersion von Styrolacrylat-Butadien mit mittlerem Glasübergangspunkt (Tg) = 3-8°C

| | | |
|---|---|---|
| Acticide MKB 3 | ≙ 13.63 % | (Biozidzubereitung, Thor Chemie) |
| Synthomer 10656 | ≙ 85.57 % | (Styrol-/Butadien Dispersion, Synthomer) |
| Agitan 260 | ≙ 0.8 % | (Mineralölentschäumer, Münzing) |

### Beispiel 4: Schutzumhüllung auf der Basis einer Dispersion von Styrol-Butadien mit hohem Glasübergangspunkt (Tg) = 48-55° C

| | | |
|---|---|---|
| Acticide MKB 3 | ≙ 13.63 % | (Biozidzubereitung, Thor Chemie) |
| Synthomer 9090 | ≙ 85.57 % | (Styrol-/Butadien Dispersion, Synthomer) |
| Agitan 260 | ≙ 0.8 % | (Mineralölentschäumer, Münzing) |

Die eingesetzte Konzentration an Filmschutzmittel entspricht der Addition der Mittel in einem üblichen Wärmedämmverbundsystem pro m², in dem die Putz- und Farbschicht durch Einmischen der Schutzmittel gegen Bewuchs mit Algen und Pilzen ausgestattet ist.

### Beispielrechnung: Filmschutzmittel pro m² Fassadenfläche

Der Putz enthält 0.5 % Filmschutzmittel. Bei einem Verbrauch von 3200 g/m² (Körnung 2 mm) sind das 16 g Filmschutzmittel/m². Die Farbe enthält 0.7 % Filmschutzmittel. Bei einem Gesamtverbrauch von 500 g/m² (zwei Anstriche) entspricht das 3,5 g Filmschutzmittel/m². Mit anderen Worten enthält 1 m² Putz + Farbe 19.5 g Filmschutzmittel.

Die in Beispielen 1-4 beschriebenen Schutzmassen wurden mittels einer Walze beidseitig auf dem Glasgittergewebe aufgetragen und im Umluftverfahren bis zur Stapelbarkeit getrocknet. Die Auftragsmenge der Schutzschicht betrug 67.35 g/m².

Das so hergestellte beschichtete Glasgittergewebe wurde analog zu den Aufbauvorschriften der Hersteller in den vorgelegten Unterputz eingespachtelt. Nach Trocknung des Untergrundes, gemäss Vorschrift, wird der Voranstrich aufgetragen und wiederum nach Trocknung in einer Folgeschicht des Oberputzes auf die Oberfläche appliziert. Zur Erreichung einer einheitlichen Schichtdicke wird der Oberputz über das Führungskorn mit einer rostfreien Stahltraufel abgezogen und anschliessend mit einer Kunststofftraufel, bis das Strukturbild erreicht ist, gerieben.

Damit diese strukturierten Oberflächen einen optimalen Oberflächenschutz aufweisen, werden üblicherweise zwei Anstriche mit einer offenporigen Fassadenfarbe aufgetragen.

Die Wirksamkeit der Filmkonservierung von Fassaden wird nach den einschlägigen Normen DIN EN 15458 "Beschichtungsstoffe - Laborverfahren für die Prüfung der Wirksamkeit von Filmkonservierungsmitteln in einer Beschichtung gegen Algen" (Ausgabe 10/2007) und DIN EN 15457 "Beschichtungsstoffe - Laborverfahren für die Prüfung der Wirksamkeit von Filmkonservierungsmitteln in einer Beschichtung gegen Pilze" (Ausgabe 10/2007) geprüft.

Abweichend von den Vorgaben zur Konditionierung der Proben gemäss EN 23270 können je nach Beschichtungsstoff und Anwendung angepasste Konditionierungsbedingungen gewählt werden (siehe EN 15457 S7 6.3 Konditionieren der Probestücke).

Für Fassadenbeschichtungen und Aussenfarben, die auf Wärmedämmverbundsystemen zur Anwendung kommen, hat es sich bewährt, die folgenden Zusatzkonditionierungen, ergänzend zu den Vorgaben der EN 23270, anzuwenden:
a.) Bewässerung der Probe, Zeitraum 4 Tage
   Ziel: Eluation wasserlöslicher Anteile im Beschichtungsfilm
   Dabei wird der Beschichtungsaufbau in einer Flächengrösse von 10 x 10 cm über den Zeitraum von 4 Tagen in einer Glasschale vollständig in Wasser getaucht. Das Wasser wird dabei täglich gewechselt und die Probe wird anschliessend bei Raumtemperatur bis zur Gewichtskonstanz getrocknet.
b.)Tempern der Probe im Zeitraum von 28 Tagen bei 40° C Lagerung
   Ziel: Abbau flüchtiger Substanzen, Perfektionierung der Aushärtung
   Dabei wird der Beschichtungsaufbau in einer Flächengrösse von 10 x 10 cm über einen Zeitraum von 28 Tagen in einem Umlufttrockenschrank geprüft, nach DIN 12880 2007-05, gelagert und anschliessend bei Raumtemperatur bis zu Temperaturkonstanz gelagert.
c.) Belastung der Proben durch Feuchtekondensat und energiereicher UV-Strahlung.
   Ziel: Forcierte Alterung der Oberflächen und praxisgerechter Abbau von oberflächennahen Substanzen und Wirkstoffen.
   Dabei wird der Beschichtungsaufbau auf einer Trägerplatte (Faserzementplatte) aufgebracht und anschliessend einer Schnellbewitterung bestehend aus einer Wechselbelastung aus energiereicher UV-Strahlung und Wasserdampfkondensat über den Zeitraum von 500 Stunden unterzogen.
   Anschliessend wird die Probe auf Temperatur- und Gewichtskonstanz bei Raumtemperatur gelagert.

### Versuch 2: Hemmwirkung von biozidbeschichtetem Armierungsgewebe im Unterputz

Das gemäss Beispiel 1 hergestellte Armierungsgewebe wurde in Versuch 2 in verschiedenen praxisgerechten Aufbauten von Wärmedämmverbundsystemen eingebaut und die Hemmwirkung der eingesetzten Filmkonservierungsmittel auf der Oberfläche der Proben gemäss DIN EN 15458 gegen Algen und gemäss DIN EN 15457 gegen Pilze geprüft. Dabei kamen die ergänzenden Zusatzkonditionierungen (wie oben erwähnt) zur Anwendung.

Zum Vergleich der Wirksamkeit wurden die Schutzmittel zur Filmkonservierung konzentrationsgleich (gleiche Menge und gleiche Wirkstoffe bezogen auf den Quadratmeter Probenfläche) in Bezugsproben in die Putzmenge eingearbeitet und ein Gewebe eingebracht, welches keine Schutzmittel enthielt.

In Probe 2.2 wurde das Gittergewebe in einen organisch gebundenen Unterputz eingearbeitet und mit der Probe 2.1, in der das Biozid zur Filmkonservierung konventionell, nur im Deck- bzw. Oberputz eingemischt wurde, verglichen (siehe Tabelle 4). Die Testergebnisse finden sich in Tabellen 5 und 6 für Pilze resp. Algen.

In Probe 2.5 wurde das Gewebe in einen mineralischen, d.h. zementgebundenen, organisch vergüteten Unterputz eingearbeitet und mit der Probe 2.4, in der das Biozid zur Filmkonservierung konventionell nur im Deck-/Oberputz eingemischt wurde, verglichen (siehe Tabelle 4). Die Testergebnisse finden sich in Tabellen 5 und 6 für Pilze resp. Algen. Dabei wurde die Wirksamkeit der Biozide gegen den Bewuchs mit Algen und Pilzen gemäss der geschilderten, erweiterten Prüfung nach DIN EN 15458 und DIN EN 15457 geprüft.

**Tabelle 4: Schichtenaufbau der Proben 2.1-2.6**

| **Nr.** | **Dämmstoff** | **Unterputz** | **Gewebe** | **Deck-/Oberputz** | **Bemerkung** |
|---|---|---|---|---|---|
| **2.1** | EPS | Typ 1 | Glasgittergewebe | Typ A mit Bioziden | Biozide im Deckputz, |
| **2.2** | EPS | Typ 1 | Glasgittergewebe mit Bioziden | Typ A | Biozide im Gewebe |
| **2.3** | EPS | Typ 1 | Glasgittergewebe | Typ A | biozidfreier Aufbau als Referenzprobe |
| **2.4** | EPS | Typ 2 | Glasgittergewebe | Typ A mit Bioziden | Biozide im Deckputz |
| **2.5** | EPS | Typ 2 | Glasgittergewebe mit Bioziden | Typ A | Biozide im Gewebe, |
| **2.6** | EPS | Typ 2 | Glasgittergewebe | Typ A | biozidfreier Aufbau als Referenzprobe |

**Unterputz Typ 1: Greutol Multiflex Spachtel 588 (organisch):**

| | |
|---|---|
| Styrolacrylat 50%iq | 9.50% |
| Terpolymer | 9.50% |
| Wasser | 9.85% |
| Titandioxid | 2.00% |
| Calciumcarbonat Füllstoff | 50.00% |
| Marmorkörnungung (0.5 - 1 mm) | 13.00% |
| Flammschutzmittel | 4.00% |
| Faser | 0.70% |
| Methylcellulose | 0.40% |
| Netz- und Dispergieradditiv | 0.10% |
| Fettalkohol | 0.50% |
| pH-Stabilisator | 0.10% |
| Entschäumer | 0.10% |
| Topfkonservierungsmittel | 0.25% |
| | |
| | **100.00%** |

**Unterputz Typ 2: Greutol Combiputz 488 (mineralisch):**

| | |
|---|---|
| CEMI 42.5 R | 19.82% |
| Trasskalk | 5.00% |
| Dispersionspulver | 2.70% |
| Calciumcarbonat Füllstoff | 70.00% |
| Mineralischer Leichtfüllstoff | 2.00% |
| Methylcellulose | 0.20% |
| Luftporenbildner | 0.02% |
| Hydrophobierungsmittel | 0.20% |
| Stärkeether | 0.02% |
| Faser | 0.04% |
| | |
| | **100.00%** |

**Deckputz A: Greutol Deckputz Aussen:**

| | |
|---|---|
| Styrolacrylat 50% | 11.00% |
| Wasser | 9.2% |
| Titandioxid | 2.00% |
| Calciumcarbonatmehl | 35.00% |
| Marmorkörnunq 0.5-2 mm | 35.00% |
| Flammschutzmittel | 5.00% |
| Faser | 0.40% |
| Methylcellulose | 0.02% |
| Schichtsilikat | 0.15% |
| Acrylatverd icker | 0.10% |
| Netz- und Dispergieradditiv | 0.30% |
| Fettalkohol | 0.70% |
| pH-Stabilisator | 0.03% |
| Entschäumer | 0.10% |
| Topfkonservierungsmittel | 0.25% |
| Filmkonservierungsmittel | 0.75% |
| | |
| | **100.00%** |

**Voranstrich Uni:**

| | |
|---|---|
| Styrolacrylat 50%ig | 19.90% |
| Wasser | 13.57% |
| Titandioxid | 1.80% |
| Calciumcarbonat Füllstoff | 64.00% |
| Verdicker | 0.30% |
| Netz- und Dispergieradditiv | 0.10% |
| pH-Stabilisator | 0.04% |
| Entschäumer | 0.04% |
| Topfkonservierunqsmittel | 0.25% |
| | |
| | **100.00%** |

Glasgittergewebe: 3000 (Flächengewicht 155 g/m², Maschenweite 7,0 x 6,5 mm)

**Tabelle 5: Ergebnisse der Tests mit Proben 2.1-2.6 gegen Pilze**

| **Nr.** | **Probe nach 4 Tagen Bewässerung** | **Probe nach 28 Tagen 40° C Lagerung** | **Probe nach 500 Std. Schnellbewitterung** |
|---|---|---|---|
| **2.1** | + | + | + |
| **2.2** | o | + | + |
| **2.3** | - | - | - |
| **2.4** | + | + | + |
| **2.5** | - | + | + |
| **2.6** | - | - | - |

| | | | |
|---|---|---|---|
| + kein Bewuchs der Probe o leichter Bewuchs der Probe - starker Bewuchs der Probe | | | |

**Tabelle 6: Ergebnisse der Tests mit Proben 2.1-2.6 gegen Algen**

| **Nr.** | **Probe nach 4 Tagen Bewässerung** | **Probe nach 28 Tagen 40° C Lagerung** | **Probe nach 500 Std. Schnellbewitterung** |
|---|---|---|---|
| **2.1** | + | + | + |
| **2.2** | + | + | + |
| **2.3** | o | o | - |
| **2.4** | + | + | + |
| **2.5** | - | + | + |
| **2.6** | - | o | - |

| | | | |
|---|---|---|---|
| + kein Bewuchs der Probe o leichter Bewuchs der Probe - starker Bewuchs der Probe | | | |

An diesen Tests lässt sich leicht erkennen, dass der Bewuchs der Probenoberfläche durch Algen und Pilze ebenso gut gehemmt wurde, wenn das mit biozidhaltigen Wirkstoffen behandelte Armierungsgitter im Unterputz eingebettet war (Proben 2.2. und 2.5), wie wenn die biozidhaltigen Wirkstoffe auf konventionelle Art in den Deckputz eingemischt wurden (Proben 2.1 und 2.4). Die Erfinder haben somit festgestellt, dass die biozidhaltigen Wirkstoffe auch von tiefer gelegenen Schichten aus Wirkung auf die Probenoberfläche entfalten, d.h. durch mehrere Schichten hindurch und über längere Zeit hinweg migrieren können. Dies hat den Vorteil, dass die Biozide nicht so schnell ausgewaschen werden und länger im System verbleiben.

### Liste der verwendeten Produkte:

| **Produkt** | **Hersteller** | **Zusammensetzung** |
|---|---|---|
| Acticide MKB 3 | Thor Chemie, Speyer | Filmkonservierer, verkapselte Wirkstoffe |
| Acronal S 559 | BASF, Ludwigshafen | Styrol-/Acrylat-Dispersion |
| Agitan 260 | Münzing Chemie | Mineralölentschäumer |
| Acrysol DR 72 | Dow, Horqen | Acrylatverdicker |
| Vinnapas HD | Wacker Chemie, Burqhausen | Styrol-/Acrylat-Dispersion |
| Synthomer 10656 | Synthomer, Frankfurt | Styrol-Butadien-/Acrylat-Dispersion |
| Synthomer 9090 | Synthomer, Frankfurt | Styrol-/Butadien-Dispersion |
| Glasgittergewebe Typ 3000 | Gavazzi, TSA, St. Gallen | Textilglasgitter gemäss ETAG 004/5.6.7.1 |

### BEZUGSZEICHENLISTE

| | | | |
|---|---|---|---|
| 1 | Verkleidungssystem | 9 | Beschichtung von 5 |
| 2 | Schichtenaufbau | 10 | Klebemörtel |
| 3 | erste Schicht, Dämmplatte | 11 | Aussenfassade eines |
| 4 | zweite Schicht, | | Gebäudes |
| | Einbettmörtel/Unterputz | 12 | Atmosphäre |
| 5 | Armierungsgewebe/Gitter | 13 | Gebäudeoberfläche |
| 6 | Voranstrich | B | Breite von 5 |
| 7 | dritte Schicht, | H | Höhe von 5 |
| | Deckputz/Oberputz | M1 | Maschenweite von 5 |
| 8 | Farbanstrich/Schutzanstrich | M2 | Maschenhöhe von 5 |

## Patentansprüche

1. Verkleidungssystem (1), insbesondere zur Dämmung, insbesondere bevorzugt zur Wärmedämmung eines Gebäudes, mindestens aufweisend
- eine erste, bei einem bestimmungsgemässen Gebrauch des Verkleidungssystems (1) einer Aussenfassade eines Gebäudes (11) zugewandte Schicht, aufweisend einen Dämmstoff (3), und
- eine zweite Schicht, aufweisend einen Unterputz (4), und
- eine dritte Schicht, aufweisend einen Oberputz (7),
**dadurch gekennzeichnet, dass** die zweite Schicht im Unterputz (4) eine als Filmkonservierungsmittel gegen Algen- und/oder Pilzbefall von darüber liegenden Schichten wirksame biozidhaltige Zusammensetzung enthält, wobei die biozidhaltige Zusammensetzung mindestens ein Fungizid enthält, das geeignet ist, den Befall der Gebäudeoberfläche (13) durch Pilze zu hindern.

2. Verkleidungssystem (1) nach Anspruch 1, **dadurch gekennzeichnet, dass** nur die zweite Schicht (4) die als Filmkonservierungsmittel gegen Algen- und/oder Pilzbefall wirksame biozidhaltige Zusammensetzung enthält.

3. Verkleidungssystem (1) nach Anspruch 1 oder 2, **dadurch gekennzeichnet, dass** die zweite Schicht (4) ein im Unterputz eingebettetes und mit der als Filmkonservierungsmittel wirksamen biozidhaltigen Zusammensetzung behandeltes Armierungsgewebe (5) aufweist, wobei das Armierungsgewebe (5) vorzugsweise ein im oberen Drittel der zweiten Schicht (4) eingebettetes Glasfasergewebe, vorzugsweise ein Gitter, Netz oder Vlies aus textilem Glasfasermaterial ist.

4. Verkleidungssystem (1) nach Anspruch 3, **dadurch gekennzeichnet, dass** nur das Armierungsgewebe (5) die als Filmkonservierungsmittel wirksame biozidhaltige Zusammensetzung aufweist, welche geeignet ist, den Befall der Gebäudeoberfläche (13) durch Algen und/oder Pilze zu hindern.

5. Verfahren zur Herstellung bzw. Montage des Verkleidungssystems (1) nach einem der vorhergehenden Ansprüche, aufweisend die folgenden Schritte:
- Verlegung des Dämmstoffs (3) auf einer Aussenfassade (11) eines Gebäudes;
- Fixierung des Dämmstoffs (3) auf der Aussenfassade (11) des Gebäudes, insbesondere durch Verkleben;
- Aufziehen der biozidhaltigen zweiten Schicht (4), insbesondere durch Aufziehen des Unterputzes (4) und vorzugsweise unmittelbar darauf folgender Einspachtelung eines mit der biozidhaltigen Zusammensetzung behandelten Armierungsgewebes (5) in den Unterputz (4) der biozidhaltigen zweiten Schicht, insbesondere vollständig im oberen Drittel der zweiten Schicht;
- Trocknenlassen der zweiten Schicht (4);
- Auftragung eines Voranstrichs (6), nach dem Trocknenlassen der zweiten Schicht (4);
- Auftragung des Deckputzes (7) frühestens am Folgetag der Auftragung des Voranstrichs (6), und gegebenenfalls Strukturierung des Deckputzes (7);
- gegebenenfalls Auftragung eines Farbanstrichs (8).

6. Verkleidungssystem (1) nach Anspruch 3, **dadurch gekennzeichnet, dass** das Armierungsgewebe (5) ein mit der biozidhaltigen Zusammensetzung vorzugsweise in einem Imprägnier- und Trocknungsprozess behandeltes Glasfasergewebe ist, wobei vorzugsweise die biozidhaltige Zusammensetzung mindestens einen diffusionsfähigen bzw. migrationsfähigen antimikrobiellen Wirkstoff enthält.

7. Verkleidungssystem (1) nach Anspruch 6, **dadurch gekennzeichnet, dass** der mindestens eine diffusionsfähige antimikrobielle Wirkstoff in einer Konzentration von mindestens 500-600 ppm in der biozidhaltigen Zusammensetzung enthalten ist.

8. Verkleidungssystem (1) nach einem der Ansprüche 6-7, **dadurch gekennzeichnet, dass** die biozidhaltige Zusammensetzung Styrolacrylat oder Styrolbutadien enthält.

9. Verkleidungssystem (1) nach einem der Ansprüche 6-8, **dadurch gekennzeichnet, dass** die biozidhaltige Zusammensetzung mindestens einen Wirkstoff aus der folgenden Gruppe enthält: Isothiazolinonderivate; Triazole; Jodverbindungen; Dithiocarbamate; Triazinderivate; Harnstoffderivate; Metallverbindungen.

10. Verkleidungssystem (1) nach einem der Ansprüche 6-9, **dadurch gekennzeichnet, dass** die biozidhaltige Zusammensetzung Octylisothiazolinon und/oder Dichloroctylisothiazolinon, und/oder mindestens ein Algizid und/oder Herbizid enthält.

11. Verkleidungssystem (1) nach einem der Ansprüche 6-10, **dadurch gekennzeichnet, dass** die biozidhaltige Zusammensetzung Terbutryn und/oder Zinkpyrithion enthält.

12. Verkleidungssystem (1) nach einem der Ansprüche 6-11, **dadurch gekennzeichnet** die biozidhaltige Zusammensetzung mindestens einen antimikrobiellen Wirkstoff in verkapselter Form enthält.

13. Verkleidungssystem (1) nach einem der Ansprüche 6-12, **dadurch gekennzeichnet, dass** das Armierungsgewebe mindestens eine Schutzschicht gegen Biozidkontakt aufweist, wobei die Schutzschicht vorzugsweise derart ausgebildet ist, dass ein Nachlassen eines Wirkens des Schutzes erst nach Einbau des Armierungsgewebes in eine Unterputzschicht einsetzt, vorzugsweise durch Auflösen der Schutzschicht in der Unterputzschicht.

## Claims

1. Covering system (1), especially for damping, more preferably for the heat insulation of a building, comprising at least
- a first layer, facing the outer facade of a building (11) during the intended use of the covering system, comprising an insulating material (3), and
- a second layer, comprising a flush mounting (4), and
- a third layer, comprising a finishing plaster (7),
**characterized in that** the second layer contains in the flush mounting (4) a biocide-containing composition effective as a film conservation agent against algae- and/or fungal infestation of above-lying layers, wherein the biocide-containing composition contains at least one fungicide, which is suitable for preventing fungal infestation of the building surface (13).

2. Covering system (1) according to claim 1, **characterized in that** only the second layer (4) contains the biocide-containing composition which is effective as a film conservation agent against algae- and/or fungal infestation.

3. Covering system (1) according to claim 1 or 2, **characterized in that** the second layer (4) contains a reinforcement fabric (5) embedded in the flush mounting and treated with the biocide-containing composition effective as a film conservation agent, wherein the reinforcement fabric (5) preferably is a fibreglass fabric embedded in the upper third of the second layer (4), preferably a mesh, net or nonwoven of textile fibreglass material.

4. Covering system (1) according to claim 3, **characterized in that** only the reinforcement fabric (5) contains the biocide-containing composition effective as a film conservation agent, which is suitable for preventing algae- or fungal infestation of the building surface (13).

5. Method for the production or mounting, respectively, of a covering system (1) according to one of the preceding claims, comprising the following steps:
- laying of the insulating material (3) on an outer facade (11) of a building;
- fixing of the insulating material (3) on the outer facade (11) of the building, preferably by gluing;
- mounting of the biocide-containing second layer (4), especially by mounting of the flush-mounting (4) and preferably immediately followed by bedding a reinforcement fabric (5) treated with the biocide-containing composition into the flush-mounting (4) of the biocide-containing second layer, preferably completely within the upper third of the second layer;
- letting the second layer (4) dry;
- application of an undercoat (6) after letting the second layer (4) dry;
- application of the finishing plaster (7) earliest on the day following the application of the undercoat (6), and optional structuring of the finishing plaster (7);
- optional application of a paint coat (8).

6. Covering system (1) according to claim 3, **characterized in that** the reinforcement fabric (5) is a fibreglass fabric treated with the biocide-containing composition preferably in an impregnating- and drying process, wherein preferably the biocide-containing composition contains at least one antimicrobial agent capable of diffusing or migrating, respectively.

7. Covering system (1) according to claim 6, **characterized in that** the at least one diffusible antimicrobial agent is contained in the biocide-containing composition at a concentration of at least 500-600 ppm.

8. Covering system (1) according to one of claims 6-7, **characterized in that** the biocide-containing composition contains styrene acrylic or styrene-butadiene.

9. Covering system (1) according to one of claims 6-8, **characterized in that** the biocide-containing composition contains at least one agent selected from the following group: derivates of isothiazolinone; triazoles; iodine compounds; dithiocarbamates; derivates of triazine; derivates of urea; metal compounds.

10. Covering system (1) according to one of claims 6-9, **characterized in that** the biocide-containing composition contains octylisothiazolinone and/or dichloroctylisothiazolinone, and/or at least one algaecide and/or herbicide.

11. Covering system (1) according to one of claims 6-10, **characterized in that** the biocide-containing composition contains terbutryn and/or zinc pyrithione.

12. Covering system (1) according to one of claims 6-11, **characterized in that** the biocide-containing composition contains at least one antimicrobial agent in encapsulated form.

13. Covering system (1) according to one of claims 6-12, **characterized in that** the reinforcement fabric contains at least one protective layer against biocide contact, wherein the protective layer preferably is designed that a reduction of a protective effect only begins after the mounting of the reinforcement fabric in a flush mounting layer, preferably by dissolving of the protective layer in the flush mounting layer.

## Revendications

1. Système d'habillage (1), en particulier pour l'isolation, en particulier préférablement pour l'isolation thermique d'un bâtiment, comprenant au moins
- une première couche faisant face à la façade extérieure d'un bâtiment (11) lors de l'utilisation conforme à l'intention du système d'habillage (1), présentant un matériau isolant, et
- une deuxième couche, présentant un crépissage (4), et
- une troisième couche, présentant un enduit de finition (7), **caractérisé en ce que**, la deuxième couche dans le crépissage (4) comprend une composition contenant un biocide efficace comme agent de conservation pour films contre l'envahissement d'algues et/ou fongique de couches situées au-dessus, où la composition contenant un biocide comprend au moins un fongicide qui est adapté pour empêcher l'envahissement fongique de la surface de bâtiment (13).

2. Système d'habillage (1) selon la revendication 1, **caractérisé en ce que** seulement la deuxième couche (4) comprend la composition contenant un biocide efficace comme agent de conservation pour films contre l'envahissement d'algues et/ou fongique.

3. Système d'habillage (1) selon la revendication 1 ou 2, **caractérisé en ce que** la deuxième couche (4) présente un tissu d'armature (5) incorporé dans le crépissage et traité avec la composition contenant un biocide efficace comme agent de conservation pour films, où le tissu d'armature (5) est préférablement un tissu à base de fibre de verre incorporé dans le tiers supérieur de la deuxième couche (4), préférablement une grille, filet ou feutre à base de matériau de fibre de verre textile.

4. Système d'habillage (1) selon la revendication 3, **caractérisé en ce que** seulement le tissu d'armature (5) présente la composition contenant un biocide efficace comme agent de conservation pour films, laquelle est adaptée pour empêcher l'envahissement de la surface de bâtiment (13) par des algues et/ou fongique.

5. Un procédé pour la production respectivement le montage d'un système d'habillage (1) selon une des revendications précédentes, comprenant les étapes suivantes :
- poser des matériaux d'isolation (3) sur une façade extérieure (11) d'un bâtiment ;
- fixer le matériau d'isolation (3) sur la façade extérieure (11) d'un bâtiment, en particulier par collage ;
- déposer une deuxième couche (4) contenant un biocide, en particulier en déposant le crépissage (4) et préférablement une application suivant immédiatement d'un tissu d'armature (5) traité avec la composition contenant un biocide dans le crépissage (4) de la deuxième couche contenant un biocide, en particulier entièrement dans le tiers supérieur de la deuxième couche ;
- sécher la deuxième couche (4) ;
- appliquer un apprêt (6), après le séchage de la deuxième couche (4) ;
- appliquer du crépi de finition (7) au plus tôt au jour suivant l'application de l'apprêt (6), et éventuellement structurer du crépie de finition (7) ;
- éventuellement appliquer une couche de peinture (8).

6. Système d'habillage (1) selon la revendication 3, **caractérisé en ce que** le tissu d'armature (5) est un tissu à base de fibre de verre traité avec la composition contenant un biocide, préférablement traité dans un procédé d'imprégnation et séchage, où préférablement la composition contenant un biocide comprend au moins un agent anti-microbien capable de diffusion respectivement de migrer.

7. Système d'habillage (1) selon la revendication 6, **caractérisé en ce que** l'au moins un agent anti-microbien capable de diffusion est contenu dans la composition contenant un biocide dans une concentration d'au moins 500-600 ppm.

8. Système d'habillage (1) selon une des revendications 6 à 7, **caractérisé en ce que** la composition contenant un biocide comprend de l'acrylate de styrène ou du butadiène-styrène.

9. Système d'habillage (1) selon une des revendications 6 à 8, **caractérisé en ce que** la composition contenant un biocide comprend au moins un agent du groupe suivant :
dérivés d'isothiazolinone; triazoles; composés d'iode; dithiocarbamates; dérivés de triazine; dérivés d'urée; composés métalliques.

10. Système d'habillage (1) selon une des revendications 6 à 9, **caractérisé en ce que** la composition contenant un biocide comprend de l'octylisothiazolinone et/ou de la dichlorooctylisothiazolinone, et/ou au moins un algicide et / ou un herbicide.

11. Système d'habillage (1) selon une des revendications 6 à 10, **caractérisé en ce que** la composition contenant un biocide comprend de la terbutryne et/ou pyrithione de zinc.

12. Système d'habillage (1) selon une des revendications 6 à 11, **caractérisé en ce que** la composition contenant un biocide comprend au moins un agent anti-microbien sous forme encapsulée.

13. Système d'habillage (1) selon une des revendications 6 à 12, **caractérisé en ce que** le tissu d'armature présente au moins une couche protectrice contre le contact avec un biocide, où la couche protectrice est préférablement formée de sorte qu'une baisse de l'activité protectrice n'intervient qu'après l'incorporation du tissu d'armature dans une couche de crépissage, préférablement par dissolution de la couche protectrice dans la couche de crépissage.
